# EUROPEAN PATENT APPLICATION

(11) **EP 0 821 162 A1**
(43) Date of publication of application: **28.01.1998**
(21) Application number: 96309243.2
(22) Date of filing: 18.12.1996
(51) Int. Cl.: F03D 1/06, F03D 1/04, F03D 9/00

(54) **Ducted wind turbine**

(30) Priority: 24.07.1996 US 685134
(71) Applicant: McCabe, Francis J., Ottsville, Pennsylvania 18942 (US)
(72) Inventor: McCabe, Francis J., Ottsville, Pennsylvania 18942 (US)
(74) Representative: Cheyne, John Robert Alexander Mackenzie

(57) **Abstract**

A wind energy conversion system comprises a wind turbine means, a transmission means (14) connected to the wind turbine means for transmitting energy from the wind turbine means to an air compression means (16) connected to the transmission means for compressing air; the wind turbine means comprises a venturi-shaped shroud (18) having an inner core and a plurality of blades fixedly connected between said inner core and said shroud. At least one of the blades has a cross-sectional shape comprising a planar face portion and leading and trailing edges, associated with opposite ends of the face portion, to form an essentially cross-sectional pan-shaped structure disposed in an inverted position. Such a system can be used to convert wind energy into useful stored energy in the form of compressed air.

## Description

This invention relates to improvements in wind energy conversion systems, such as windmills; and more particularly to systems used to convert energy into stored pneumatic power; that is, compressed air.

In the prior art, it was known to use windmills with air compressor units that are powered by the wind energy turning the windmill, to store air under pressure for use, for example, in generating electricity. See for example U.S. Patent Numbers 4,055,950; 4,236,083 and 4,447,738.

Windmill type designs have also been used in wind turbines with various shaped impeller blades and angles encased in a cowling designed to direct the wind over the blades. See for example U.S. Patent Numbers 1,025,428; 4,021,135; 4,140,433; 4,132,499; 4,133,992; 4,324,985 and 4,720,640.

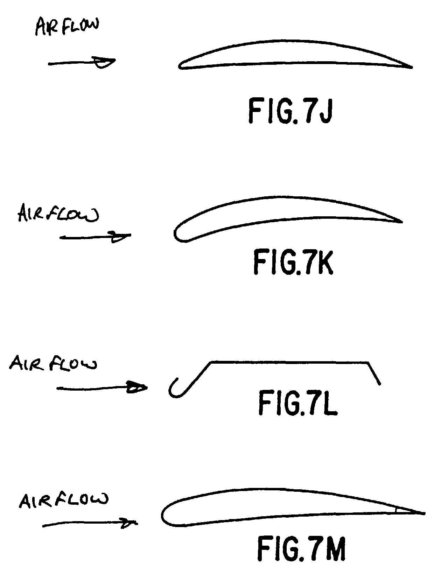

A wide variety of shapes of airfoil have been used to harness the power of air. See, for example, the schematic prior art drawings shown in Figures 7J-7M. These shapes are designed primarily to act in response to air flowing in the direction of the arrow identified as "air flow", impacting upon the angle of attack at which the airfoil blade is mounted, and causing the blade to lift. In a typical airplane blade, for example, the angle of attack is such that a negative pressure is created above the wing (blade or airfoil) and the wing rises as the air flows across it.

For example, US Patent No. 4,655,122, discloses an improved aerodynamic shape which comprised essentially a planar face portion and leading and trailing edges associated with opposing ends of the face portion to develop a pan-shaped enclosure shown more particularly in a detailed cross section of Figure 4 of that patent. This blade was shown in use in an air damper where one or more blades were pivoted for rotation within a frame. In that environment, the blades provided an increased lift when forced to open by escaping air from a structure, and thus this permitted the blades to be constructed of a relatively heavy gauge material without compromising damper efficiency.

One of the primary goals of the prior art configurations was to get more revolutions per minute (rpm) out of the device. Thus, the blade configurations were such as to pass air quickly through the device. To do this, the blades would be so configured and positioned as to not interfere with each other's air flow.

One of the problems with prior art devices was that in sustained high winds they would tend to "run away" and burn up. Furthermore, at low winds or intermittent winds, they could not produce the sustained energy, i.e. constant speed, necessary to produce, for example, electricity.

According to one aspect of the present invention there is provided a wind energy conversion system comprising a wind turbine means, a transmission means connected to said wind turbine means for transmitting the energy from said wind turbine means to an air compression means connected to said transmission means for compressing air; said wind turbine means comprising a venturi-shaped shroud having an inner core and a plurality of blades fixedly connected between said inner core and said shroud; at least one of said blades having a cross-sectional shape comprising a planar face portion and leading and trailing edges associated with opposite ends of the face portion to form an essentially cross-sectional pan-shaped structure disposed in an inverted position.

According to a second aspect of the present invention, there is provided an airfoil for use in a flowing air stream, having a shape comprising a planar face portion and leading and trailing edge portions associated with opposite edges of the face portion to form, in cross section, an essentially inverted pan-shaped structure when disposed with its leading edge facing into the flow of air, and having a flange portion associated with and extending from and beneath the trailing edge portion back toward the leading edge portion.

An embodiment of the invention is concerned with a new wind energy conversion system for particular application to stored energy, such as compressed air. In an embodiment of the invention, energy is extracted from the air movement at low speeds. The configuration of the airfoil blades and the device which supports them is such that there is an interaction between adjacent airfoil blades to provide more torque at slower speeds. In a system in accordance with the invention, as much air as possible is collected within the device rather than passing through quickly, and thus as much force as possible can be collected. Further, the shape, positioning and configuration of the blades within the device tends to prevent it from running away; in other words, there is actually a braking effect.

Reference will now be made, by way of example, to the accompanying drawings, in which:
Figure 1 is a front view of a preferred embodiment of the present invention;
Figure 2 is a side view of the embodiment shown in Figure 1;
Figures 3a and 3b are a perspective view and an enlarged cross-sectional view respectively of a blade used in the embodiment of Figures 1 and 2;
Figure 4 is an enlarged view, partially broken away, of portions of the apparatus shown in Figures 1 and 2;
Figure 5 is an end view of a portion of the apparatus shown in Figure 4;
Figure 6 is a schematic view showing alternate positioning of the blade shown in Figure 3;
Figures 7J-7P are schematic views of cross-sections of various blade configurations;
Figure 8 is a front view of an alternate embodiment of the present invention; and
Figure 9 is a side view of the alternate embodiment shown in Figure 8.

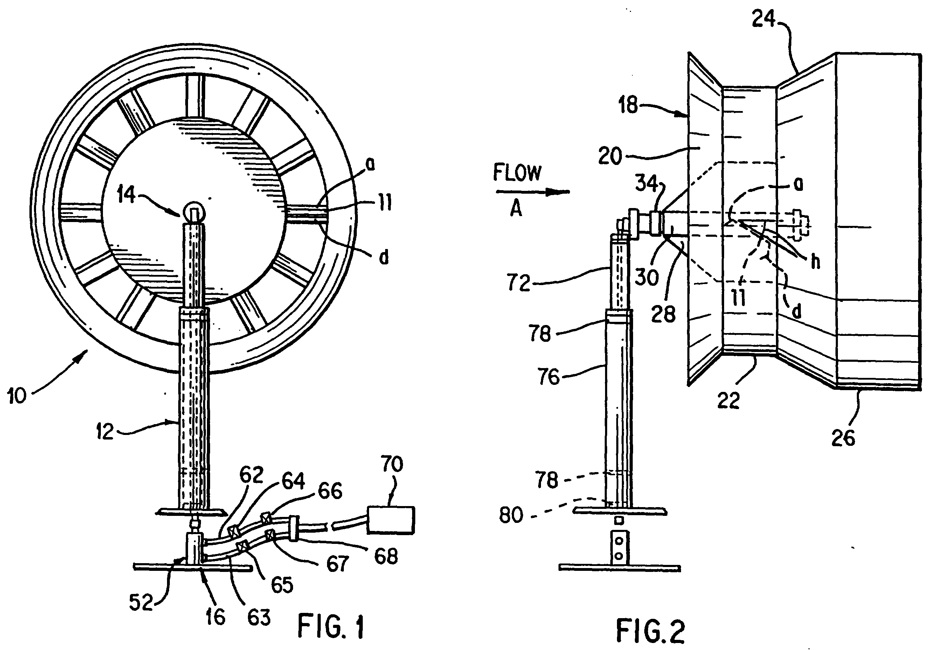

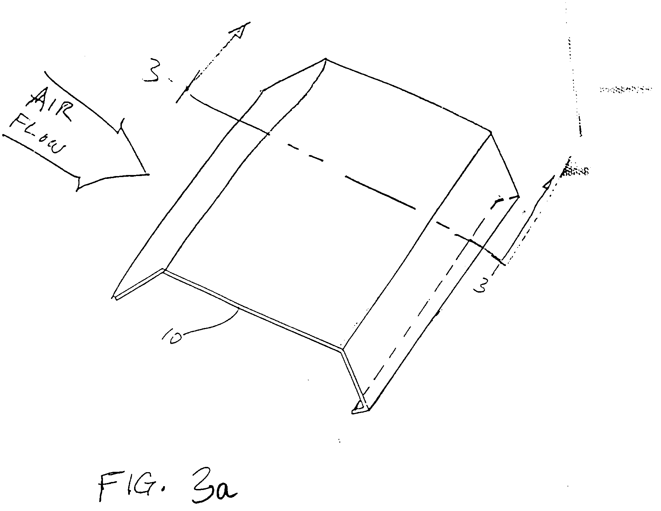

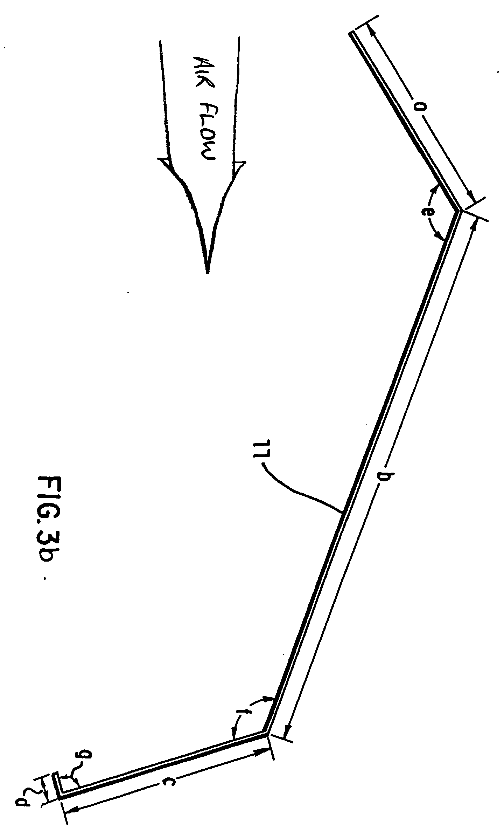

Referring to the Figures, Figure 1 shows a front elevation of a device embodying the present invention which comprises a wind turbine means, designated generally **10** mounted for rotation on a frame and mounting means designated generally **12** and connected by a transmission means designated generally **14** to an air compression means designated generally **16** for converting wind energy into compressed air.

The basic physical elements comprising the wind turbine means include the shroud means designated generally **18** shown in Figure 2 which is generally in the shape of a venturi. The shroud has an intake section **20**, a throat section **22**, an exhaust section **24** and a trailing edge section **26**.

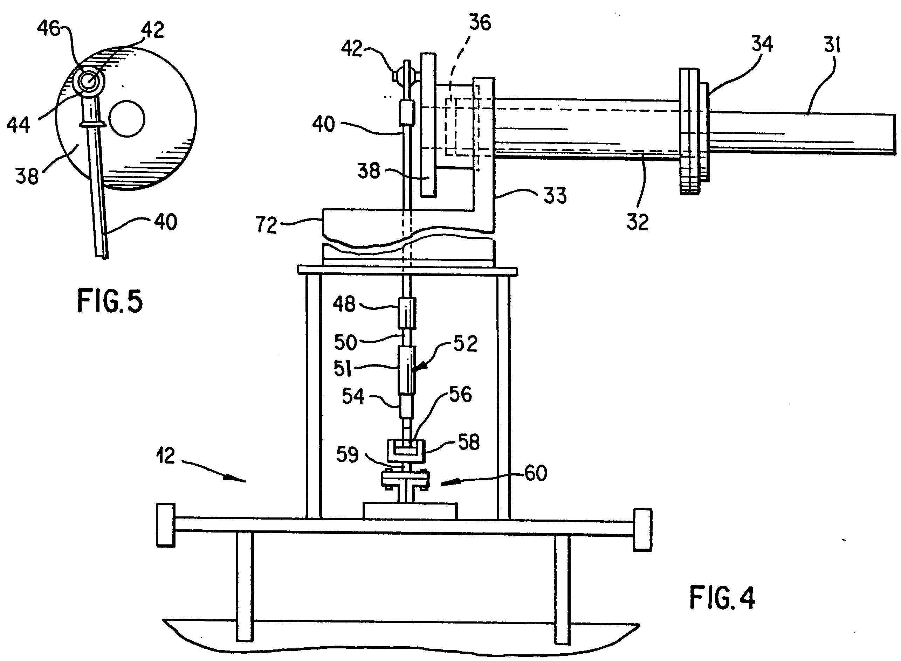

To facilitate the mounting of the wind turbine means, including the mounting of the blades, an internal core **28** is provided. As will be understood from Figure 2, the surfaces of the core define a venturi with the surfaces of the shroud; so that the provision of the core within the shroud effectively provides a torroid/venturi. The core and the shroud are preferably made of a sheet metal such as aluminum. The core has as an integral part thereof an axially shaft **30** which is mounted on the mill shaft **31**, Figure 4. A support arm **32**, which is part of the frame and mounting means **12**, is welded to and extends from the vertical flange **33** of the vertical support shaft **72**. The shaft **31** is mounted for rotation in the arm **32**, as by means of roller bearings **34**, **36**, shown in Figure 4 and is retained axially therein by any suitable means (not shown but conventional per se). The rotating shaft **30** terminates in a crank plate **38** shown in Figure 4 which is fixedly connected thereto to rotate therewith. The crank plate is used to drive a connecting rod **40**. To this end a pin **42** is fixedly mounted in the crank plate **38** and an eye **44** is fixedly mounted on the end of the connecting rod **40**. A bearing **46** is mounted between the pin **42** and the eye **44** to provide for rotation therebetween. Thus, in operation when the shafts **30**, **31** rotate the crank plate **38** rotates and the connecting rod **40** oscillates and is driven vertically.

The other end of the connecting rod **40** is coupled by the coupling **48** shown in Figure 4 to the piston rod **50** of a double acting air piston/cylinder means **52**. The piston/cylinder means **52** is mounted by a shaft **54**, to a universal joint comprising a pivotable arm **56** retained in a yoke **58** which is mounted by any suitable means designated generally **60**, to a part of the frame and mounting means **12**. Thus, in operation as the shaft **30** rotates and the connecting rod **40** reciprocates, the piston rod **50** reciprocates in the air cylinder 51 of piston/cylinder means **52** to compress air. It will be appreciated from what has been described that the rod is oscillating or swinging back and forth as it reciprocates and the pivotable arm **56** and yoke **58** accommodate and facilitate that movement.

It will further be appreciated that the positioning of the pin **42** in the crank plate **38** could be varied, as well as the diameter of the crank plate, to vary the stroke of the connecting rod **40** as desired.

The double acting air piston/cylinder means **52** compress air on both the upstroke and down stroke of the rod **50** by any suitable means such as the arrangement shown in Figure 1. This arrangement comprises pneumatic tubes **62**, **63**, intake check valves **64**, **65**, directional flow control valves **66**, **67**, manifold tubing designated generally **68**, and connecting tubing and valve means to a compressed air storage means designated generally **70** (not shown in detail but conventional per se) for collecting and dispensing compressed air.

To accommodate the direction in which the wind is blowing, the entire structure is pivotable. This is accomplished by having the vertical support shaft **72** rotate within the support cylinder **76**; bearings **78** and thrust bearing **80**. As the direction of the wind changes, the shaft **72** will rotate. The trailing edge section **26** controls this rotation depending upon the air flow shown by the arrow A in Figure 2. As the shaft rotates the yoke **58** rotates about the support pin **59** Figure 4 to aid in accommodating this movement.

Referring now to Figures 1, 2, 3a, 3b and 6, I will describe in detail the airfoil blade means. The most preferred structure of an airfoil blade 11 in accordance with this invention is that shown in Figure 3. As an example of the exact measurement and construction of this blade for use in a small (under ten feet diameter) windmill the dimensions are as follows: the leading edge a = 4"; the planar face portion b = 11.5"; the trailing edge c = 4.125"; the flange d = .562"; angle e is 130°; angle f is 127°; angle g is 90°. The material used is 11 gauge aluminum.

The cross-sectional shape of this blade shows that is comprises essentially a planar face portion "b" and leading "a" and trailing "c" edges associated with opposite ends of said face portion, such that the cross-sectional shape is an inverted pan-shaped enclosure, with a flange "d" extending from the trailing edge "c" back towards the leading edge "a".

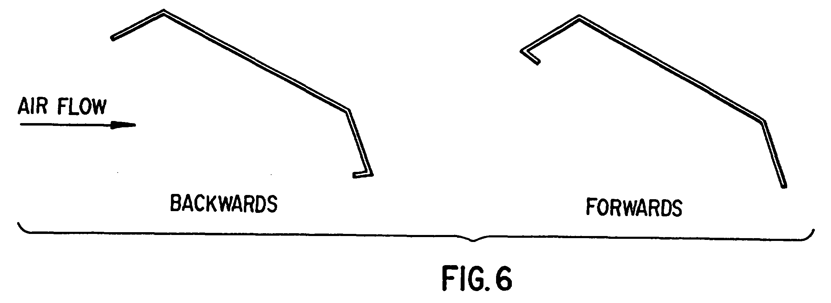

This blade can be mounted either forwards or backwards in the wind turbine means **10**; as those terms can be understood from the illustration in Figure 6. It has been determined from experiments that the backwards position (Figures 1, 2, 3a and 3b) is preferred, i.e. so that wind impinges first on the leading edge "a".

The blades are fixedly mounted between the shroud **18** and the core **28** in the throat section **22**. In actual tests, fourteen blades were used in an eight foot windmill. Tests were conducted at various speeds. The blades were spaced approximately one foot apart on angles varying between 6° and 45° (see angle H in Figure 2). In the unit tested with blades at 36°, 7 mph was needed to overcome inertial forces and start the windmill turning. A wind of 3 mph was necessary to maintain its rotation.

When blade angles were increased, threshold speeds were higher and running speeds increased.

It was further determined that the optimum blade setting for low winds seemed to be better at shallower angles.

It is theorized that the preferred blade shape and positioning captures air rather than let it pass freely through the apparatus. This has several effects. First, it causes aerodynamic lift. Secondly, it can trap air and increase the driving force. Also, in a windmill, for example, the adjacent blade can enhance the lift. The device will not continuously accelerate and burn up because the relative wind change due to rotation reduces lift acting as a braking action as the angle of attack approaches the zero lift range. In operation, this means that the device collects as much force as possible, even though it is going slower rather than faster, in contrast to the prior art. For example, at a 60 to 65 mph wind, the maximum speed would be approximately 100 revolutions per minute (rpm).

It has been observed that with less blades there is greater speed, while, in this device, with more blades there is more torque and lower speed.

A number of standard blade shapes were tested as shown by the shapes illustrated schematically in Figure 7J-7M, using a wind tunnel. The blades shown from the top are: blade J, an ordinary air foil carved from balsa wood in the shape used by NACA (the predecessor of NASA) for lower speed aircraft such as gliders or model airplanes; K, a fan blade air foil made of plastic; L, an air foil blade of the type shown in U.S. Patent 4,655,122; and M, an air foil with a flap at the back as shown in M.

Experiments focused on the torque enhancement from air flow inducement provided by windmills and blades or "air dams" which were designed to harness the most force possible from a given air flow. Blades were selected for their ability to maximize force and tests were conducted to establish a relationship between air mass flow and volume stored under pressure (density). The object was to determine the spacing and fluid flow interaction between blades which would yield the most force, thus determining the number of blades to be used in the windmill. For preliminary testing, it was decided to use sixteen blades with six foot windmills. A total of seventeen blade prototypes were made and tested. The drawings, Figures 7J-7M, show a representative sample of blade configurations. A blade embodying the present invention was also tested.

The testing involved several steps. First, each blade was installed at a specified angle (the installment angle range was 20° through 35° at intervals of 5°; and sometimes included readings at 15°). The blades were balanced to insure equilibrium prior to starting the air flow. With the wind on, two measurements were taken: maximum upward force and optimum angle at which the maximum force occurred. Testing progressed with three things in mind:
1. Optimum position (forward or backward for either or both blades);
2. Spacing between blades that would yield the highest force readings; and
3. The angle of the blades which would yield the highest force readings.

The most important relationship found in this testing concerned the spatial arrangement of the blades. It is theorized that while blade position is not the most important factor concerning the pattern of force reading; it is a very important factor in the magnitude of the force readings. Thus, it was determined that the highest force readings occurred when both blades were as shown in Figures 3a and 3b and were positioned top and bottom, in a wind tunnel test where one was mounted over another, were in the backward position; with a spacing of 70% to 75% of chord length.

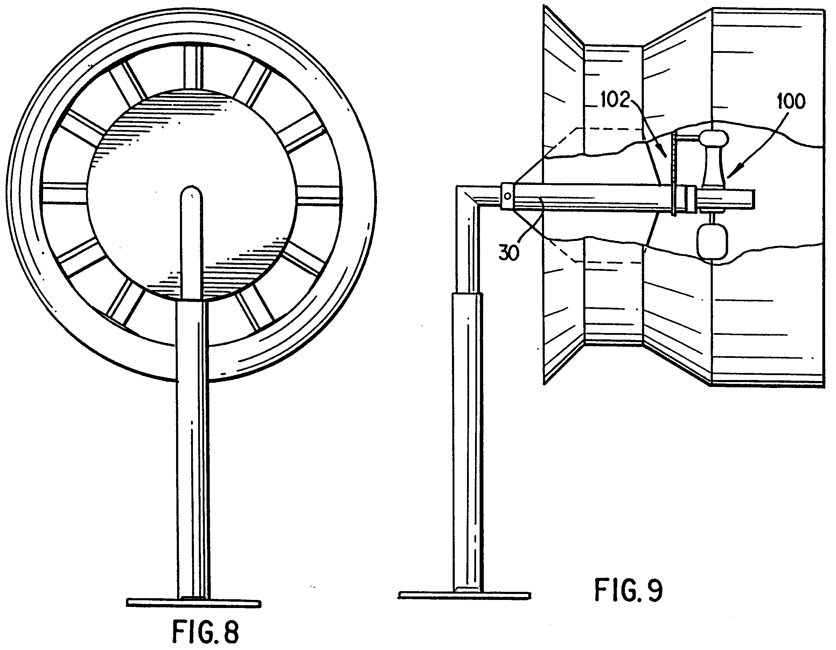

Figures 8 and 9 show an alternative embodiment of my invention in which the air compression means designated generally 100 can be directly attached by means of a belt drive means **102** to the shaft **30** and fixedly mounted in any suitable way to either the support structure so that as the shaft **30** turns, the belt means **102** compresses air.

From what has been described, it will be appreciated that an embodiment of the present invention provides a new type of wind energy conversion apparatus (windmill) which is highly efficient for converting wind energy into useful power. While most wind machines are designed to either pump water or produce electricity, my system is meant to compress air. The air can be stored at any desired site without energy loss for an unlimited time, unlike electric storage systems which leak power and slowly lose efficiency or water, which must be pumped to higher elevations in order to rely on the potential energy as a power source. Because air can be compressed by a machine running at any speed, variations in wind and the operation of the wind machine are not factors; unlike the direct production of electricity which requires a specific frequency. Thus, the machines of energy generation and storage are greatly simplified when using compressed air as the medium.

As a by-product of this operation, the heat generated by compressing the air can be extracted for use through heat exchangers. By doing so, the cooler air pumped into the storage tank has greater energy potential per unit volume. The heat that is generated can be used as desired, such as, for example, hot water, heating homes or even as secondary source.

While the airfoil blade embodying an aspect of the present invention has been described in connection with a windmill application, it should be apparent that an airfoil blade embodying an aspect of the invention has a shape which produces lift which can be used other applications, for example in a propeller or impeller or fan. The propeller/impeller blades can be enhanced by a tapered shape and by transitioning from the slower (windmill air speed range) shape at the hub to a flatter angled pan-shape with shorter forward facing trailing edge flanges at the (faster moving) tips. This aerodynamic shape builds up pressure underneath rather than relying on negative pressure on the top, because the air is dammed up within the blade envelope. In the prior art, for example, the ordinary airfoil can be mounted with an angle of attack which goes from 15° to 26° and then "stalls" (begins upper surface separation and turbulence). With a blade shape embodying this invention, it is possible to start lower and go further, i.e., 7° to 45°. Further, if one were to plot lift versus angle attack, the curve past 26° would ordinary drop off. With this blade, it is essentially a flat curve. There is as little as 7-1/2% deviation from 25° to 45°.

I also note that the shallower the angle of attack, the more the blade acts as a normal airplane blade wing shape. When the angle gets to approximately 32°, more air is trapped within the blade envelope, particularly because of the back angled flange, and, thus, there is provided greater upward thrust.

In a steep angle between 30° to 45°, I believe the blade is no longer working as an airplane blade wing would, in that the negative pressure along the top of the wing is the lesser means by which force is being imparted; rather the airfoil is being air lifted.

## Claims

1. A wind energy conversion system comprising a wind turbine means, a transmission means connected to said wind turbine means for transmitting the energy from said wind turbine means to an air compression means connected to said transmission means for compressing air; said wind turbine means comprising a venturi-shaped shroud having an inner core and a plurality of blades fixedly connected between said inner core and said shroud; at least one of said blades having a cross-sectional shape comprising a planar face portion and leading and trailing edges associated with opposite ends of the face portion to form an essentially cross-sectional pan-shaped structure disposed in an inverted position.

2. A system as claimed in claim 1 wherein the blade with the described cross-section has a flange extending from the trailing edge back toward the leading edge.

3. A system as claimed in claim 1 wherein there are a plurality of said blades positioned at approximately 32 degree angles to the direction of air flow through said turbine means.

4. A system as claimed in claim 1 wherein said shroud has a cylindrically shaped trailing portion extending from the trailing edge of the venturi.

5. A system as claimed in claim 1 wherein the inner core forms a torroid with said shroud.

6. A system as claimed in claim 1 further comprising a frame and mounting means connected to said wind turbine means for mounting said wind turbine means, a rotatable shaft connected to and axially extending from said core and mounted for rotation about its axis on an arm extending from said frame and mounting means, to rotate in response to rotation of said wind turbine means; said transmission means comprising a crank plate attached to the end of said rotatable shaft; a connecting rod connected to a pin off the axial center of said crank means and positioned for circular movement about said center; means connecting said pin to a connecting rod so that said rod can oscillate and reciprocate in response to rotation of said plate.

7. A system as claimed in claim 6 further comprising means connecting one end of said rod to a double acting air piston/cylinder means, comprising a piston and cylinder, said piston being connected to said rod by a piston rod for moving said piston in response to the reciprocation of said connecting rod; means mounting said air piston/cylinder means such that said cylinder is both pivotable with the oscillation of said connecting rod and rotatable; support means embracing a shaft means connected to said rotatable shaft of said wind turbine means to permit rotation thereof in a support means housing said shaft means for rotation about its axis such that the direction of the wind into said wind turbine means will move said wind turbine means and rotate said shaft means.

8. A wind energy conversion system comprising a wind turbine means, a frame and mounting means for mounting said wind turbine means, a transmission means for transmitting the energy from said wind turbine means, an air compression means connected to said transmission means for compressing air in response to the movement of said transmission means; said wind turbine means comprising a venturi-shaped shroud having an inner core forming a torroid therewith; a plurality of blades fixedly connected between said inner core and said shroud; a rotatable shaft connected to and axially extending from said core and mounted for rotation about its axis on an arm extending from said frame and mounting means; said transmission means comprising a crank plate attached to the end of said rotatable shaft; a connecting rod connected to a pin off the axial center of said crank means and positioned for circular movement about said center; means connecting said pin to a connecting rod so that said rod traverses said pin and reciprocates; means connecting one end of said rod to a double acting air piston/cylinder means, said air piston/cylinder means comprising a piston and cylinder arrangement, said piston being connected to said rod by a piston rod for moving said piston in response to the reciprocation of said connecting rod; means mounting said air piston/cylinder means such that said cylinder is both pivotable with the oscillation of said connecting rod and rotatable; support means embracing a shaft means connected to a bearing housing; said bearing housing retaining said shaft of said wind turbine means to permit rotation thereof, said support means housing a shaft for rotation about its axis such that the direction of the wind into said wind turbine means will move said wind turbine means and rotate said shaft; said wind turbine means including a plurality of blades, each having a cross-sectional shape comprising an essentially planar face portion and leading and trailing edges associated with opposite ends of the face portion to be a cross-sectionally inverted, pan-shaped enclosure.

9. An airfoil for use in a flowing air stream, having a shape comprising a planar face portion and leading and trailing edge portions associated with opposite edges of the face portion to form, in cross section, an essentially inverted pan-shaped structure when disposed with its leading edge facing into the flow of air, and having a flange portion associated with and extending from and beneath the trailing edge portion back toward the leading edge portion.

10. A device having a plurality of airfoils as claimed in Claim 9, each positioned substantially radially in a wind activated device at a range of angles approximately 7 to 45 degrees to the direction of air flow through said device.

11. A device as claimed in claim 10, wherein each airfoil is positioned in said device substantially radially to the axial direction of airflow.
